# EUROPÄISCHE PATENTANMELDUNG

(11) **EP 1 426 754 A1**
(43) Veröffentlichungstag der Anmeldung: **09.06.2004**
(21) Anmeldenummer: 03025485.8
(22) Anmeldetag: 06.11.2003
(51) Int. Cl.: G01N 15/14, G01N 21/64, G06F 19/00

(54) **Verfahren zur Steuerung einer Bildaufnahme und Steuereinrichtung hierfür**

(30) Priorität: 04.12.2002 DE 10256706
(71) Anmelder: Leica Microsystems Wetzlar GmbH, 35578 Wetzlar (DE)
(72) Erfinder: Jung, Reiner, 35428 Langgöns (DE)
(74) Vertreter: Hössle Kudlek & Partner

(57) **Zusammenfassung**

Die Erfindung betrifft die Steuerung einer Bildaufnahme, bei der eine Steuereinheit (6) die zur Bildaufnahme erforderlichen Geräte (2, 3, 4, 5) ansteuert und eine Rechnereinheit (1), die Daten der aufgenommenen Bilder verarbeitet. Um die Geschwindigkeit, die Flexibilität und die Reproduzierbarkeit der Bildaufnahme zu erhöhen, wird vorgeschlagen, Steuerbefehle zur Bildaufnahme zu mindestens einem Skript zusammen zu fassen und zumindest ein Skript von der Rechnereinheit (1) an die Steuereinheit (6) zu übertragen.

## Beschreibung

Die Erfindung betrifft ein Verfahren zur Steuerung einer Bildaufnahme, zu der eine Steuereinheit, die zur Bildaufnahme erforderliche Geräte ansteuert sowie eine Rechnereinheit, die die Daten der aufgenommenen Bilder verarbeitet, verwendet werden. Weiterhin betrifft die Erfindung eine geeignete Steuereinrichtung sowie ein geeignetes Computerprogramm (-produkt) zur Steuerung einer Bildaufnahme.

Bei vielen Bildaufnahmeverfahren werden Bilder von Objekten in hoher Zeit- und/oder Ortsauflösung aufgenommen und diese Bilder anschließend zu Filmsequenzen und/oder dreidimensionalen Bildern verarbeitet. Ein Anwendungsbeispiel ist die Beobachtung und Analyse von Veränderungen in lebenden Zellen.

In der WO 99/39184 sind beispielsweise ein Verfahren und eine Vorrichtung zur Aufnahme und Analyse von Bildern biologischen Materials offenbart. Das in einer Probenplatte befindliche Material wird von einem Mikroskop abgebildet, wobei die Bilder von einer Kamera erfasst werden. Der Objekttisch wird in den Raumrichtungen X, Y und Z verschoben, wobei hierzu in einem Computer eine entsprechendes Objekttisch-Modul-Software vorhanden ist, die über eine Objekttisch-Steuereinheit die Verschiebung des Objekttisches für einen Scanvorgang steuert. Die während des Scanvorgangs von der Kamera aufgenommenen Bilder werden im Computer digitalisiert und anschließend erfolgt eine Bildauswertung mittels eines Bildverarbeitungs-Software-Moduls. Diese Einrichtung ermöglicht es, lebende Zellen, beispielsweise markiert mit radioaktiven oder fluoreszierenden Substanzen, bildlich zu erfassen und die Bilder hinsichtlich verschiedener Kriterien, wie Absorption, Fluoreszenzintensität oder Morphologie, auszuwerten.

Bildaufnahme und Bildauswertung erfolgen gemäß der genannten WO 99/39184 über in einem Computer vorhandene Software-Module. Hierdurch wird bei dieser Versuchsanordnung die zu erzielende Bildaufnahmegeschwindigkeit beschränkt. Der Computer muss zum einen den Scanvorgang regeln und zum anderen die Bildverarbeitung und Bildauswertung bewerkstelligen.

Weiterhin ist ein Bildanalysesystem der Firmen Olympus Deutschland und T.I.L.L. Photonics GmbH zur Aufnahme und Analyse von zeitlich sich schnell verändernden Prozessen (beispielsweise in lebenden Zellen) bekannt. Das System soll in hoher Zeitauflösung dreidimensionale Bilder liefern können. Es weist ein Fluoreszenzmikroskop sowie einen Piezofokus zur Justierung entlang der Z-Achse auf. Die Bilderfassung erfolgt über eine CCD-Kamera. Die Fluoreszenzanregung erfolgt über einen Gittermonochromator. Weiterhin weist das System einen Mikrocontroller zur Ansteuerung der Systemkomponenten sowie einen PC zur Aufnahme der Bilder mit einer Rate von bis zu 200 Hz auf.

Nachteil bei dem genannten System ist die eingeschränkte Reproduzierbarkeit und Flexibilität, da die Steuereinheit (Mikrocontroller) die Systemkomponenten gemäß einem fest vorgegebenen Steuerprogramm steuert, das auf die jeweilige Versuchsanordnung abgestimmt sein muss. Der Benutzer hat bei einem solchen System nicht die Möglichkeit, bei einem sich ändernden Versuchsaufbau das Steuerprogramm flexibel und einfach auszutauschen bzw. abzuändern.

Die vorliegende Erfindung soll daher eine Bildaufnahme mit hoher zeitlicher und/oder örtlicher Auflösung ermöglichen, wobei die Ablaufgeschwindigkeit der Bildaufnahme bei gleichzeitiger höherer Flexibilität und Reproduzierbarkeit noch gesteigert ist.

Hierzu schlägt die Erfindung ein Verfahren zur Steuerung einer Bildaufnahme, zu der eine Steuereinheit, die zur Bildaufnahme erforderliche Geräte ansteuert, sowie eine Rechnereinheit, die die Daten der aufgenommenen Bilder verarbeitet, verwendet werden, vor, wobei Steuerbefehle zur Bildaufnahme erfindungsgemäß zu mindestens einem Skript zusammengefasst werden und zumindest ein Skript von der Rechnereinheit an die Steuereinheit übertragen wird.

Gemäß vorliegender Erfindung sind somit Steuereinheit (Controller) und Rechnereinheit (PC) für unterschiedliche Aufgaben bei der Bildaufnahme zuständig, wobei die Steuereinheit im wesentlichen die verschiedenen Geräte, wie Mikroskop, Kamera, Objekttisch etc., ansteuert, während die Rechnereinheit (PC) im wesentlichen für den Empfang und die weitere Bearbeitung der Bilddaten zur Verfügung steht. Gleichzeitig sind erfindungsgemäß die einzelnen Steuerbefehle für die Steuereinheit zu einem so genannten Skript zusammengefasst und werden als eine Einheit (Skript) an die Steuereinheit übertragen, wobei das Skript vor oder nach dem übertragen in Maschinencode übersetzt (kompiliert) werden kann.

Die Steuerung der einzelnen Geräte erfolgt dann auf der Steuereinheit durch Interpretation (Abarbeiten) des Skripts (Makro) oder einmaliges Erzeugen des Maschinencodes und Ausführen dieses Codes (Geschwindigkeitsvorteil).

Die Vorteile sind eine höhere Ablaufgeschwindigkeit, da die verschiedenen Aufgaben (Steuerung des Objekttisches, Aufnahme der Bilddaten etc.) von mehreren Prozessoren erledigt werden können, eine höhere Flexibilität, da vorhandene Skripts auf der Rechnereinheit (PC) vom Benutzer bequem geändert werden können, sowie eine exakte Reproduzierbarkeit, da ein Skript auf der Rechnereinheit vorgehalten und bei Bedarf erneut an die Steuereinheit zur Ausführung übergeben werden kann.

Vorteilhaft ist eine Verschlüsselung der Skripte, um verschiedene Zugriffsrechte (Lesen, Schreiben etc.) definieren oder die Übertragung von Skripten selektieren zu können.

Es ist vorteilhaft, mehrere Skripts auf der Rechnereinheit vorzuhalten. Je nach Versuchsanordnung kann ein Benutzer dann ein passendes Skript zur Steuerung der Bildaufnahme auswählen. Weiterhin ist es möglich und vorteilhaft, ein Skript auf der Rechnereinheit neu zu erstellen, zu ändern und/oder zu ergänzen. Somit kann flexibel auf sich ändernde Anforderungen reagiert werden.

Weiterhin ist vorteilhaft, wenn jeweils nur das momentan auszuführende Skript von der Rechnereinheit an die Steuereinheit übertragen wird, und wenn nur dieses Skript jeweils in der Steuereinheit vorhanden ist. Dies erhöht die Reproduzierbarkeit und entlastet die Steuereinheit (Controller).

Eine erfindungsgemäße Steuereinrichtung zur Steuerung einer Bildaufnahme sieht eine Steuereinheit zur Ansteuerung von zur Bildaufnahme erforderlichen Geräten sowie eine Rechnereinheit zur Verarbeitung von Daten der aufgenommenen Bilder vor, wobei die Rechnereinheit zur Bereitstellung von mindestens einem Steuerbefehle für die Bildaufnahme zusammenfassenden Skript ausgebildet ist und zur Übertragung zumindest eines Skripts mit der Steuereinheit in Verbindung steht.

Es ist vorteilhaft, wenn die Rechnereinheit mit einer Speichereinheit zum Vorhalten mehrerer Skripts ausgestattet ist. Weiterhin ist vorteilhaft, wenn die Rechnereinheit durch Eingabe- und Anzeigemittel ausgestaltet ist, um Skripts neu zu erstellen, bestehende Skripts zu ändern und/oder zu ergänzen.

Ein vorteilhafter Einsatz der Erfindung zeigt sich bei der mehrdimensionalen Bildaufnahme. Bei der 3D-Bildaufnahme ist es beispielsweise erforderlich, die Bildstapel mit der maximal zu erzielenden Geschwindigkeit aufzunehmen. Eine hierzu geeignete Vorrichtung enthält eine Kamera, die ein von einem Mikroskop erfasstes Bild eines Objektes aufnimmt und an eine Rechnereinheit überträgt. In der Rechnereinheit findet die Aufnahme und Weiterverarbeitung der Bilddaten statt. Die Vorrichtung kann weiterhin eine Beleuchtungseinrichtung enthalten, um das Objekt mit einer geeigneten Frequenz zu beleuchten, bei der beispielsweise Fluoreszenzen angeregt werden. Weiterhin kann eine Probeverschiebeeinrichtung vorgesehen sein, um das Objekt definiert in den Raumrichtungen zu verschieben, um somit beispielsweise ein Scannen zu ermöglichen. Alternativ hierzu kann auch eine Verschiebung des Mikroskops realisiert werden. Die genannte Vorrichtung wird nunmehr mit der oben beschriebenen erfindungsgemäßen Steuereinrichtung ausgestattet.

Mit der genannten Vorrichtung können mehrdimensionale Bilder (beispielsweise von lebenden Zellen) mit hoher Geschwindigkeit aufgenommen und verarbeitet werden. Hierzu werden folgende Schritte durchlaufen:
a) Einstellen der Z-Ebene (am Mikroskop oder durch Verschiebung des Objekttisches mit einem Piezo)
b) Einstellen der Wellenlänge (mittels eines Monochromators kann eine einzelne Wellenlänge oder ein Wellenlängenbereich zur Beleuchtung des Objekts ausgewählt werden)
c) Öffnen des Shutters
d) Bildaufnahme
e) Schließen des Shutters.

Um nun einen Bildstapel aufzunehmen, werden die Schritte a) bis e) beliebig oft durchlaufen. Es entsteht ein Bildstapel von einer oder mehreren lebenden Zellen. Dieser Bildstapel wird nun von einer nachgelagerten Software weiter verarbeitet. Die Geschwindigkeit der Aufnahme des Bildstapels muss dem zu untersuchenden Objekt bzw. den zu untersuchenden Prozessen angepasst sein. Bei den zur Bildaufnahme erforderlichen Geräten handelt es sich hier um ein Mikroskop, eine lichtempfindliche Kamera, einen Monochromator, ein Piezoelement sowie einen Shutter (Abschlussvorrichtung bei lichtempfindlichen Proben). Diese Komponenten werden von einer Steuereinheit (Controller) nach einem vorher zu definierenden Verfahren gemäß der Schritte a) bis e) angesteuert.

Erfindungsgemäß wird nun abhängig von dem jeweiligen Versuchsaufbau ein Skript, also eine Abfolge einzelner Steuerbefehle für die Steuereinheit, erstellt, wobei dieses Erstellen des Skripts bereits auf der Rechnereinheit (PC) der genannten Vorrichtung erfolgen kann. Alternativ ist die Auswahl des passenden Skripts aus auf der Rechnereinheit abgelegten Skripts möglich. Das Skript wird nun von der Rechnereinheit an die Steuereinheit übertragen. Beim Start der Bildaufnahme wird von der Rechnereinheit ein Startsignal an die Steuereinheit gesandt. Somit können beide Einheiten getriggert werden, wobei die Rechnereinheit mit der Aufnahme der Bilddaten beginnt, während die Steuereinheit mit der Steuerung der zur Bildaufnahme erforderlichen Geräte startet.

Das erfindungsgemäße Steuerungsverfahren lässt sich zweckmäßigerweise mittels eins Computerprogramms ausführen, das auf einer geeigneten Rechnereinheit zum Ablauf gebracht wird. Dieses Computerprogramm kann zudem die Erstellung, die Auswahl und die Änderung von Skripts ermöglichen. Es übernimmt die Übertragung eines Skripts von der Rechnereinheit an die Steuereinheit. Schließlich kann es zur Erzeugung von Startsignalen an die Steuereinheit zum Start der Bildaufnahme verwendet werden.

Das Computerprogramm kann auf geeigneten Datenträgern, wie EEPROMs, Flash-Memories, aber auch CD-ROMs, Disketten oder Festplattenlaufwerken gespeichert sein. Auch das Herunterladen eines Programms über interne oder öffentlich nutzbare Netze ist bekannt.

Im folgenden soll die Erfindung in einem Ausführungsbeispiel anhand der beigefügten Figuren näher erläutert werden.
- Figur 1: zeigt schematisch ein System zur mehrdimensionalen Bildaufnahme mit einer erfindungsgemäßen Steuereinrichtung und
- Figur 2: zeigt das Flussdiagramm eines erfindungsgemäßen Verfahrens zur Bildaufnahme.

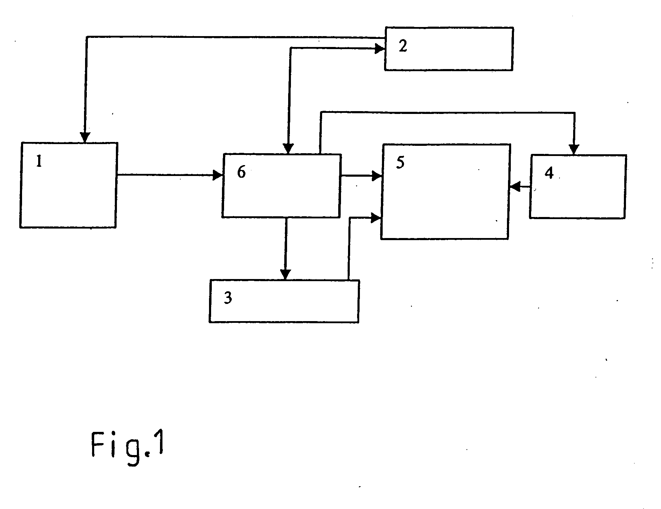

Figur 1 zeigt schematisch einen Versuchsaufbau zur dreidimensionalen Bildaufnahme zur Beobachtung und Analyse von Veränderungen in lebenden Zellen. Schematisch dargestellt sind die hier zur Bildaufnahme notwendigen Geräte, nämlich ein Mikroskop 5, ein Monochromator 3, der zur Beleuchtung des Objektes mit monochromatischem Licht dient, einem Piezoelement 4, das eine Verschiebung des Objekttisches in Z-Richtung vornehmen kann, und eine Kamera 2, die als lichtempfindliche Digitalkamera die Bilder des Mikroskops aufnimmt und zur Weiterverarbeitung bereitstellt. Weiterhin dargestellt sind die Rechnereinheit 1 (PC) und die Steuereinheit 6 (Controller).

Die in Figur 1 dargestellten Pfeile geben das Zusammenwirken der Systemkomponenten an. Das generelle Zusammenspiel der einzelnen zur Bildaufnahme dienenden Geräte und der Steuereinheit 6 wird in einem geeigneten Skript (Makro) definiert. Dieses wird zweckmäßigerweise in der Rechnereinheit 1 erstellt und dort auch abgelegt, damit es zu einem späteren Zeitpunkt wieder aktiviert werden kann. In diesem Skript wird definiert, in welcher zeitlicher Abfolge und nach welchem Schema die einzelnen Geräte (Kamera 2, Mikroskop 5, Piezoelement 4, Monochromator 3) angesprochen werden. Nach Fertigstellung des Skripts wird dieses mit geeigneten Befehlen auf die Steuereinheit (Controller) 6 übertragen. Die Steuereinheit 6 ist nun in der Lage, dieses Skript abzuarbeiten und die darin enthaltenen Steuerbefehle für die einzelnen Geräte in entsprechende Signale zur Ansteuerung dieser Geräte umzusetzen. Dieser von der Steuereinheit erzeugte Maschinencode kann nun sehr schnell von diesem ausgeführt werden.

Zum Starten der Sequenz wird nun von der Rechnereinheit 1 ein Startsignal gesendet. Die Steuereinheit 6 beginnt mit der Ansteuerung der zur Bildaufnahme notwendigen Geräte. Auf der Rechnerseite werden nach dem Startsignal nur noch die Bilddaten der Kamera 2 als Rohdaten empfangen und stehen zur weiteren Bearbeitung zur Verfügung. Nach Abarbeitung des Skripts in der Steuereinheit 6 stehen alle Bilddaten auf der Rechnereinheit 1 zur Verfügung. Die Steuereinheit 6 ist nun bereit, das Skript erneut auszuführen oder von der Rechnereinheit 1 ein anderes Skript zu empfangen und zu starten. Vorteilhafterweise befindet sich in der Steuereinheit 6 nur das momentan auszuführende Skript.

Auf der Rechnerseite ist es möglich, eine Vielzahl von Skripts vorzuhalten. Somit können geeignete Skripts erneut übertragen und ausgeführt werden (Reproduzierbarkeit). Die Flexibilität ist durch die einfache Änderbarkeit von Skripts auf der Rechnerseite gegeben. Da Steuerung der Bildaufnahmegeräte und Empfang und Auswertung der Daten voneinander getrennt ablaufen, wird die Ablaufgeschwindigkeit und damit die zu erzielende Bildfrequenz deutlich erhöht.

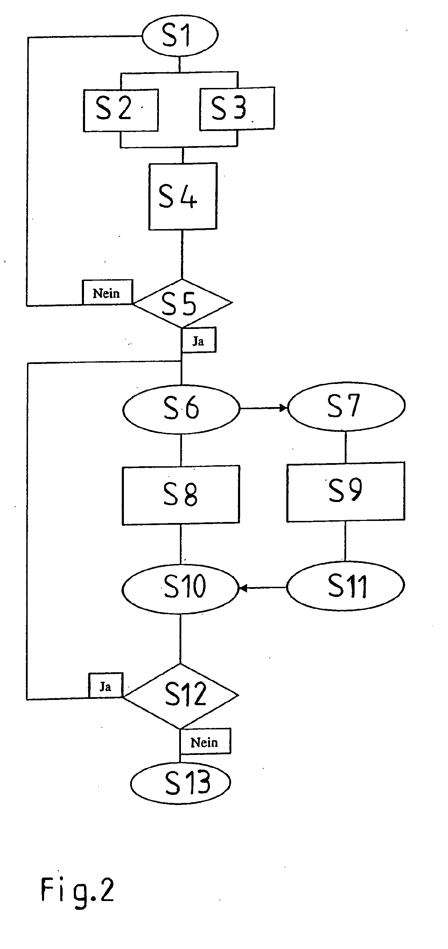

Figur 2 zeigt ein Beispiel eines erfindungsgemäßen Verfahrens zur Steuerung der Bildaufnahme, wie es für oben beschriebene Versuchsanordnung eingesetzt werden kann. Der dargestellte Verfahrensablauf kann zweckmäßigerweise von einem Computerprogramm übernommen werden.

Die Schritte S1 bis S5 dienen der Vorbereitung der Bildaufnahme, während die Schritte S6 bis S13 der eigentlichen Bildaufnahme dienen. Im Schritt S1 wird ein Programm zur Bildaufnahme in Betrieb gesetzt, das das Erzeugen eines Skripts (Schritt S2) oder das Laden eines vorhandenen Skripts (Schritt S3) ermöglicht. Zur Sicherheit findet im Schritt S4 eine Syntaxüberprüfung statt, um Fehler im Skript aufzudecken und damit Fehlsteuerungen während der eigentlichen Bildaufnahme zu verhindern. Im Schritt S5 wird das Ergebnis der Syntaxüberprüfung aus Schritt S4 mitgeteilt, wobei bei negativem Ergebnis zum Start (S1) zurückgegangen wird, während bei positivem Ergebnis mit der eigentlichen Bildaufnahme begonnen werden kann.

Sollte die Syntaxüberprüfung negativ ausfallen, so kann das betreffende Skript auf der Rechnereinheit 1 (vgl. Figur 1) bequem abgeändert werden (Schritt S2) oder ein neues Skript ausgewählt werden (Schritt S3).

Nach positiver Syntaxüberprüfung beginnt die eigentliche Bildaufnahme, indem im Schritt S6 das betreffende Skript von der Rechnereinheit 1 an die Steuereinheit 6 übertragen wird. Gleichzeitig wird in diesem Fall ein Startsignal übertragen, so dass die Steuereinheit 6 mit dem Abarbeiten des Skripts (Schritt S7) beginnen kann. Während das Skript im Schritt S9 abgearbeitet wird, findet parallel hierzu der Empfang der Bilddaten durch die Rechnereinheit 1 im Schritt S8 statt. Die empfangenen Bilddaten werden beispielsweise zu dreidimensionalen Bildsequenzen verarbeitet oder bestimmte Prozesse werden analysiert und ausgewertet. Nach Abarbeitung des Skripts (S11) kann von der Steuereinheit ein Endsignal an die Rechnereinheit 1 übertragen werden (Schritt S10). Die Rechnereinheit beendet dann die Aufnahme von Bilddaten.

Im Schritt S12 erfolgt die Beurteilung, ob das ausgewählte Skript nochmals zur Aufnahme weiterer Bilddaten abgearbeitet werden soll. Wenn ja, erfolgt ein Rücksprung zum Schritt S6, wenn nein, erfolgt das Ende der Prozedur (S13).

Wird der Versuchsaufbau verändert, wird die Prozedur durch Starten (Schritt 1) neu begonnen.

Die Erfindung ermöglicht eine mehrdimensionale Bildaufnahme mit Geschwindigkeiten, die hervorragend für die Untersuchung von Veränderungen lebender Objekte (Zellen) geeignet sind.

### Bezugszeichenliste

- 1: Rechnereinheit
- 2: Kamera
- 3: Monochromator
- 4: Piezoelement
- 5: Mikroskop
- 6: Steuereinheit

- S1-S13: Verfahrensschritte

## Patentansprüche

1. Verfahren zur Steuerung einer Bildaufnahme, zu der eine Steuereinheit (6), die zur Bildaufnahme erforderliche Geräte (2, 3, 4, 5) ansteuert, sowie eine Rechnereinheit (1), die die Daten der aufgenommenen Bilder verarbeitet, verwendet werden,
**dadurch gekennzeichnet,**
**dass** Steuerbefehle zur Bildaufnahme zu mindestens einem Skript zusammenfasst werden und zumindest ein Skript von der Rechnereinheit (1) an die Steuereinheit (6) übertragen wird.

2. Verfahren nach Anspruch 1, **dadurch gekennzeichnet, dass** mehrere Skripts auf der Rechnereinheit (1) vorgehalten werden.

3. Verfahren nach Anspruch 1 oder 2, **dadurch gekennzeichnet, dass** ein Skript auf der Rechnereinheit (1) neu erstellt, geändert und/oder ergänzt wird.

4. Verfahren nach einem der Ansprüche 1 bis 3, **dadurch gekennzeichnet, dass** zum Start der Bildaufnahme von der Rechnereinheit (1) ein Startsignal an die Steuereinheit (6) gesendet wird.

5. Verfahren nach einem der Ansprüche 1 bis 4, **dadurch gekennzeichnet, dass** nur jeweils das momentan auszuführende Skript an die Steuereinheit (6) übertragen wird.

6. Verfahren nach einem der Ansprüche 1 bis 5, **dadurch gekennzeichnet, dass** ein Skript verschlüsselt wird.

7. Steuereinrichtung zur Steuerung einer Bildaufnahme, wobei eine Steuereinheit (6) zur Ansteuerung von zur Bildaufnahme erforderlichen Geräten (2, 3, 4, 5) und eine Rechnereinheit (1) zur Verarbeitung der Daten der aufgenommenen Bilder vorgesehen sind,
**dadurch gekennzeichnet,**
**dass** die Rechnereinheit (1) zur Bereitstellung von mindestens einem Steuerbefehle für die Bildaufnahme zusammenfassenden Skript ausgebildet ist und zur Übertragung zumindest eines Skripts mit der Steuereinheit (6) in Verbindung steht.

8. Steuereinrichtung nach Anspruch 7, **dadurch gekennzeichnet, dass** die Rechnereinheit (1) zur Bereitstellung mehrerer Skripts ausgebildet ist.

9. Steuereinrichtung nach Anspruch 7 oder 8, **dadurch gekennzeichnet, dass** die Rechnereinheit (1) zur Erstellung, Änderung und/oder Ergänzung von Skripts ausgebildet ist.

10. Steuereinrichtung nach einem der Ansprüche 7 bis 9, **dadurch gekennzeichnet, dass** die Rechnereinheit (1) zur Übertragung eines Startsignals an die Steuereinheit (6) ausgebildet ist.

11. Steuereinrichtung nach einem der Ansprüche 7 bis 10, **dadurch gekennzeichnet, dass** die Steuereinheit (6) derart ausgebildet ist, dass sich jeweils nur das momentan abzuarbeitende Skript in der Steuereinheit (6) befindet.

12. Vorrichtung zur mehrdimensionalen Bildaufnahme mit einer Kamera (2), die ein von einem Mikroskop (5) erfasstes Bild eines Objektes aufnimmt und an eine Rechnereinheit (1) überträgt, sowie eventuell mit einer Beleuchtungs- (3) und/oder Probeverschiebeeinrichtung (4), um das abzubildende Objekt zu beleuchten bzw. zu verschieben, wobei die Vorrichtung eine Steuereinrichtung gemäß einem der Ansprüche 7 bis 11 aufweist.

13. Computerprogramm mit Progammcode-Mitteln, um alle Schritte von wenigstens einem der Ansprüche 1 bis 6 durchzuführen, wenn das Computerprogramm auf einem Computer oder einer entsprechenden Rechnereinheit, insbesondere der Rechnereinheit (1) und/oder Steuereinheit (6) in einer Steuereinrichtung gemäß Anspruch 7, ausgeführt wird.

14. Computerprogrammprodukt mit Prgrammcode-Mitteln, die auf einem computerlesbaren Datenträger gespeichert sind, um das Verfahren nach wenigstens einem der Ansprüche 1 bis 6 durchzuführen, wenn das Computerprogrammprodukt auf einem Computer oder einer entsprechenden Rechnereinheit, insbesondere der Rechnereinheit (1) und/oder der Steuereinheit (6) in einer Steuereinrichtung gemäß Anspruch 7, ausgeführt wird.
